# EUROPÄISCHE PATENTANMELDUNG

(11) **EP 0 670 581 A1**
(43) Veröffentlichungstag der Anmeldung: **06.09.1995**
(21) Anmeldenummer: 95810133.9
(22) Anmeldetag: 02.03.1995
(51) Int. Cl.: H01H 9/10, H02B 11/26

(54) **Als Schubeinsatz ausgebildeter Sicherungs-Lastschalter**

(30) Priorität: 04.03.1994 CH 642/94
(71) Anmelder: WEBER AG, CH-6020 Emmenbrücke (CH)
(72) Erfinder: Wiget, Stefan, CH-6275 Ballwil (CH)
(74) Vertreter: Hug Interlizenz AG

(57) **Zusammenfassung**

Der als Schubeinsatz für Einschubverteiler ausgebildete Sicherungs-Lastschalter weist rückseitig angeordnete Steckverbindungen zu mehreren, nebeneinander verlaufenden Sammelschienen (2,3), seitlich angeordnete Klemmen (4) für den Anschluss von Abgangsleitungen (5), NH-Sicherungen (7) sowie eine Schaltwerk (8) zur gemeinsamen Schaltung von sammelschienenseitig und abgangsseitig der NH-Sicherungen (7) angeordneten Schaltkontakten auf. Zur Erzielung einer schmalen Bauweise sind die NH-Sicherungen (7) bezüglich ihrer Längsrichtung parallel neben- bzw. übereinander angeordnet.

## Beschreibung

### TECHNISCHES GEBIET

Die vorliegende Erfindung bezieht sich auf einen als Schubeinsatz für Einschubverteiler ausgebildeten Sicherungs-Lastschalter mit rückseitig angeordneten Steckverbindungen zu mehreren, nebeneinander verlaufenden Sammelschienen, seitlich angeordneten Klemmen für den Anschluss von Abgangsleitungen, NH-Sicherungen sowie einem Schaltwerk zur gemeinsamen Schaltung von sammelschienenseitig und abgangsseitig der NH-Sicherungen angeordneten Schaltkontakten.

### STAND DER TECHNIK

Die Energieverteilung wird im Niederspannungsbereich traditionell in Schränken aufgebaut, wobei weitgehend standartisierte Einbaueinheiten verwendet werden. Hierbei unterscheidet man zwischen Einsätzen, bei denen die Ein- und Abgänge fest (z.B. an Kabel) montiert sind, Schubeinsätzen, bei denen die Eingänge auf Sammelschienen gesteckt und lediglich die Ausgänge fest montiert sind und Einschüben, bei denen sowohl die Ein- als auch die Abgänge gesteckt sind. Nach der eingangs angegebenen Definition befasst sich die vorliegende Erfindung mit den an zweiter Stelle erwähnten Schubeinsätzen.

Üblicherweise werden in einem Schaltschrank mehrere solche Schubeinsätze übereinander montiert, wobei im Schrank neben dem Montagebereich für die Schubeinsätze ein sog. Kabelanschlussraum für die an die Abgänge der Schubeinsätze seitlich anzuschliessenden Kabel vorgesehen ist.

Das in den einschlägigen Schubeinsätzen vorgesehene Schaltwerk dient dem Zweck, die NH-Sicherungen spannungsfrei schalten und sie dadurch sicher auswechseln zu können. Üblicherweise sind die NH-Sicherungen hinter einem Deckel oder dergleichen angeordnet, welcher sich nur nach vorgängiger Betätigung des Schaltwerks öffnen lässt.

Ein Schubeinsatz der eingangs genannten Art von typischer Ausbildung ist z.B. aus der DE-A1 42 04 238 bekannt. Dieser umfasst eine sogenannte NH-Sicherungsleiste, in der, wie die Bezeichnung "Leiste" auch zum Ausdruck bringt, mehrere NH-Sicherungen bezüglich ihrer Längsrichtung in Reihe hintereinander in derselben Horizontalebene angeordnet sind. Durch diese Anordnung der NH-Sicherungen ergibt sich eine relativ grosse Breite für den Schubeinsatz und damit zwangsläufig auch für den ihn aufnehmenden Schaltschrank. Demgegenüber weist der bekannte Schubeinsatz jedoch nur eine geringe Höhe auf.

### DARSTELLUNG DER ERFINDUNG

Durch die vorliegende Erfindung, wie sie in den Patentansprüchen gekennzeichnet ist, wird ein als Schubeinsatz ausgebildeter Sicherungs-Lastschalter geschaffen, welcher in raumökonischer Hinsicht verbessert und dadurch gleich mehrere Vorteile gegenüber den bekannten aufweist:
- Durch die Neben- bzw. Übereinander-Anordnung der NH-Sicherungen kann der Schubeinsatz wesentlich schmaler als die bekannten Schubeinsätze mit Hintereinander-Anordnung der NH-Sicherungen aufgebaut werden.
- Die sich durch die schmalere Bauform ergebende grössere Höhe des erfindungsgemässen Schubeinsatzes ist nicht von Nachteil, da die geringere Höhe bei den bekannten Lösungen häufig gar nicht ausgenutzt werden kann. Zwecks Abführung der Verlustleistung müssen dort nämlich fast immer Zwischenräume bzw. Leerfelder zwischen den einzelnen Schubeinsätzen belassen werden. Die bekannten Schubeinsätze dürfen mit anderen Worten nicht unmittelbar übereinander montiert bzw. dicht gepackt werden. Die allein von der niedrigen Bauhöhe her an sich mögliche Anzahl von Abgängen pro Schaltschrank lässt sich deswegen gar nicht realisieren.
- Die erfindungsgemässen Schubeinsätze können hingegen unmittelbar übereinander montiert werden. Die Gefahr einer Überhitzung besteht dabei nicht. Um eine mit dem Bekannten vergleichbare Anzahl von Abgängen zu erreichen, können einfach zwei vertikale Reihen von erfindungsgemässen Schubeinsätzen in einen Schaltschrank eingebaut werden. Hierbei wird der für die Anschlusskabel erforderliche Kabelanschlussraum vorzugsweise zwischen den beiden Reihen vorgesehen. Die Schubeinsätze einer Reihe müssen dazu allerdings "auf dem Kopf", d.h. umgekehrt wie die der anderen Reihe montiert werden. Ein solcher Aufbau benötigt wegen der geringen Breite der einzelnen erfindungsgemässen Schubeinsätze nicht mehr Raum, als er für die bekannten Lösungen bisher ebenfalls schon erforderlich und üblich war.
- Sofern nur wenige Abgänge benötigt werden, kann bei Verwendung der erfindungsgemässen Schubeinsätze ein schmalerer Schrank verwendet werden. In diesem Fall ist der Gesamt-Platzbedarf erheblich geringer. Bei den bekannten Schubeinsätzen wird die volle Schrankbreite dagegen stets, unabhängig von der Anzahl der erforderlichen Abgänge, beansprucht.
- Bedingt durch die grössere Bauhöhe kann beim erfindungsgemässen Schubeinsatz mit weiterem Vorteil neben den drei üblichen Phasen auch der Neutralleiter mit durch den Schubeinsatz durchgeführt und vom Schaltwerk auch mitgeschaltet werden.
- Beim den bekannten Schubeinsätzen sind die Abgangs-Anschlüsse bedingt durch die geringe Bauhöhe oft nicht gut zugänglich. Auch hier schafft die vorliegende Erfindung Abhilfe, indem die Abgänge auf eine grössere Höhe verteilt werden können. Die Abgänge können ohne weiteres sogar in einer Ebene übereinander angeordnet werden.
- Bedingt durch die geringere Breite können die internen Verbindungen bei den erfingsgemässen Schubeinsätzen kürzer gehalten werden als bei den bekannten. Dies reduziert die Verlustleistung.

Unter Bezugnahme auf die beigefügten Zeichnungen werden nachfolgend Ausführungsbeispiele für erfindungsgemässe Schubeinsätze bzw. als solche ausgebildete Sicherungs-Lastschalter erläutert.

### KURZE ERLÄUTERUNG DER FIGUREN

Es zeigen
- Fig. 1: einen Sicherungs-Lastschalter nach der Erfindung in Ansicht von vorn,
- Fig. 2: den gleichen Lastschalter von hinten,
- Fig. 3: einen Schaltschrank mit lediglich einer Reihe erfindungsgemässer Sicherungs-Lastschalter bzw. Schubeinsätze,
- Fig. 4: einen Schaltschrank mit zwei Reihen solcher Schubeinsätze,
- Fig. 5.: schematisch den internen Aufbau des Schubeinsatzes von Fig. 1 und 2 in einer Horizontalebene im Bereich der mittleren NH-Sicherung von Fig. 1, und
- Fig. 6: einen weiteren als Schubeinsatz ausgebildeten erfindungsgemässen Sicherungs-Lastschalter für kleinere Leistungen.

### WEGE ZUR AUSFÜHRUNG DER ERFINDUNG

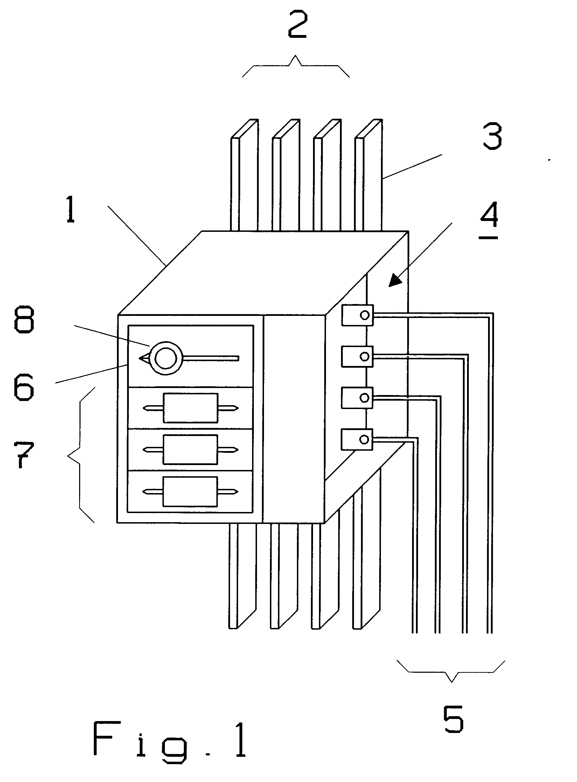

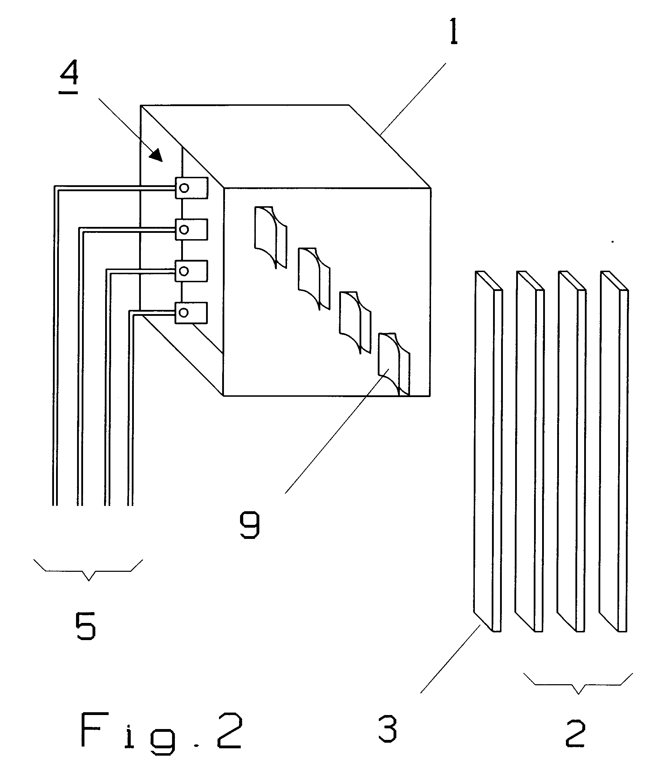

In Fig. 1 bezeichnet 1 das Gehäuse des dargestellten und als Schubeinsatz ausgebildeten Sicherungs-Lastschalters. Mittels rückseitig an diesem angeordneten Steckkontakten ist dieser auf Speise-Sammelschienen 2 sowie eine Neutralleiter-Schiene 3 aufgesteckt, respektive aufsteckbar. Die Steckkontakte sind z.B. sogenannte Kontakttulpen und in Fig. 2, die den Schubeinsatz von hinten zeigt, mit 9 bezeichnet.

Als Abgänge sind seitlich Klemmen 4 vorgesehen, an welche Kabel 5 angeschlossen werden können. Die Klemmen 4 sind hier in einer Ebene übereinander angeordnet.

Mit 6 ist das eigentliche Sicherungs- und Schaltteil bezeichnet, welches drei NH-Sicherungen 7 enthält sowie ein Schaltwerk, von dem hier nur der Schalthebel 8 dargestellt ist. Für das Sicherungs- und Schaltteile 6 können auf dem Markt verfügbare Einheiten verwendet werden, wobei allerdings noch gewisse Anpassungen erforderlich sein können.

Die NH-Sicherungen 7 weisen jeweils einen Sicherungskörper auf, aus dem beiseitig Messerkontakte hervorstehen. Entsprechend der Darstellung sind sie bezüglich ihrer Längsrichtung von Messerkontakt zu Messerkontakt parallel zueinander sowie übereinander angeordnet. Durch diese Anordnung ergibt sich für den gesamten Schubeinsatz eine schmale Bauform.

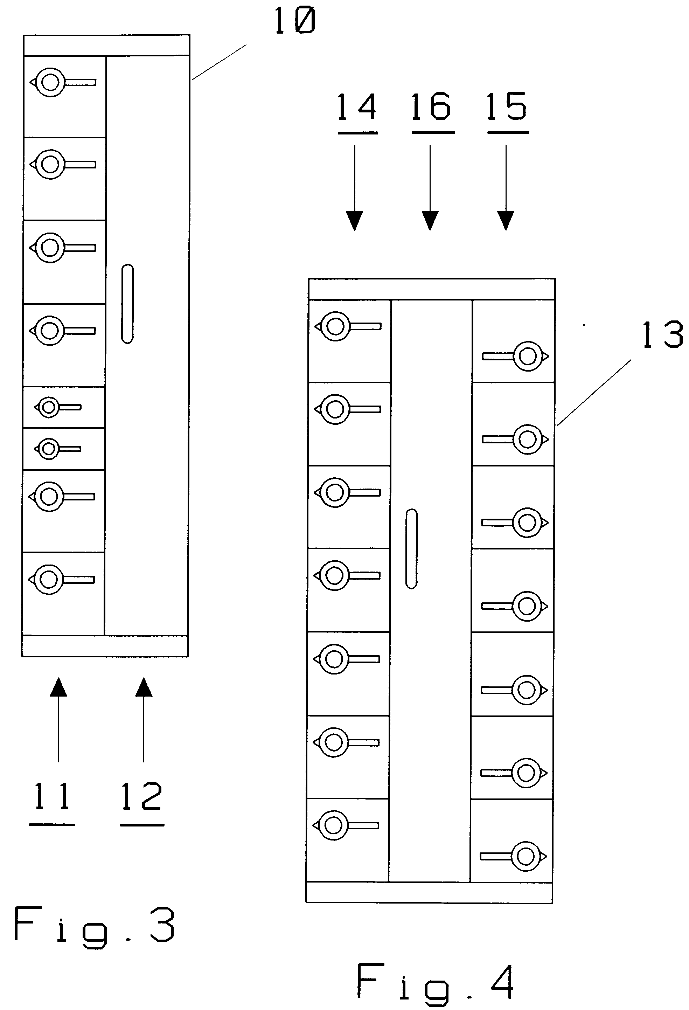

Fig. 3 zeigt einen Schaltschrank 10 in welchen Schubeinsätze der Art von Fig. 1 bzw. 2 eingebaut sind und zwar unmittelbar übereinander in einer Reihe 11 (Voll-Ausbau). Neben der Montagereihe 11 weist der Schrank 10 einen sogenannten Kabelanschlussraum 12 auf, von welchem in der Darstellung nur eine Fronttür zu sehen ist. In diesem Raum 12 verlaufen die in den Fig. 1 und 2 mit 5 bezeichneten Anschlusskabel.

Fig. 4 zeigt einen Schaltschrank 13 mit zwei Reihen 14 und 15 von unmittelbar übereinander angeordneten Schubeinsätzen der Art von Fig. 1 bzw. 2. Der mit 16 bezeichnete Kabelanschlussraum ist hier für beide Montagereihen 14 und 15 gemeinsam zwischen diesen vorgesehen. Wie durch die Stellung der Schalthebel angedeutet, sind die Schubeinsätze der rechten Reihe 15 gegenüber denen der linken Reihe 14 einfach "auf dem Kopf" montiert, damit bei sonst identischer Ausbildung die Anschlussklemmen 4 zweils nach innen zum Kabelanschlussraum 16 hin zu liegen kommen.

Der Schrank 13 von Fig. 4 weist insgesamt etwa die Breite von heute üblichen Schränken im Bereich zwischen 100 cm und 120 cm auf, in den mit Sicherungs-Lastschaltleisten realisierte Schubeinsätze montiert werden können. Der Schrank 10 von Fig. 3 ist dagegen etwa 1/3 schmaler.

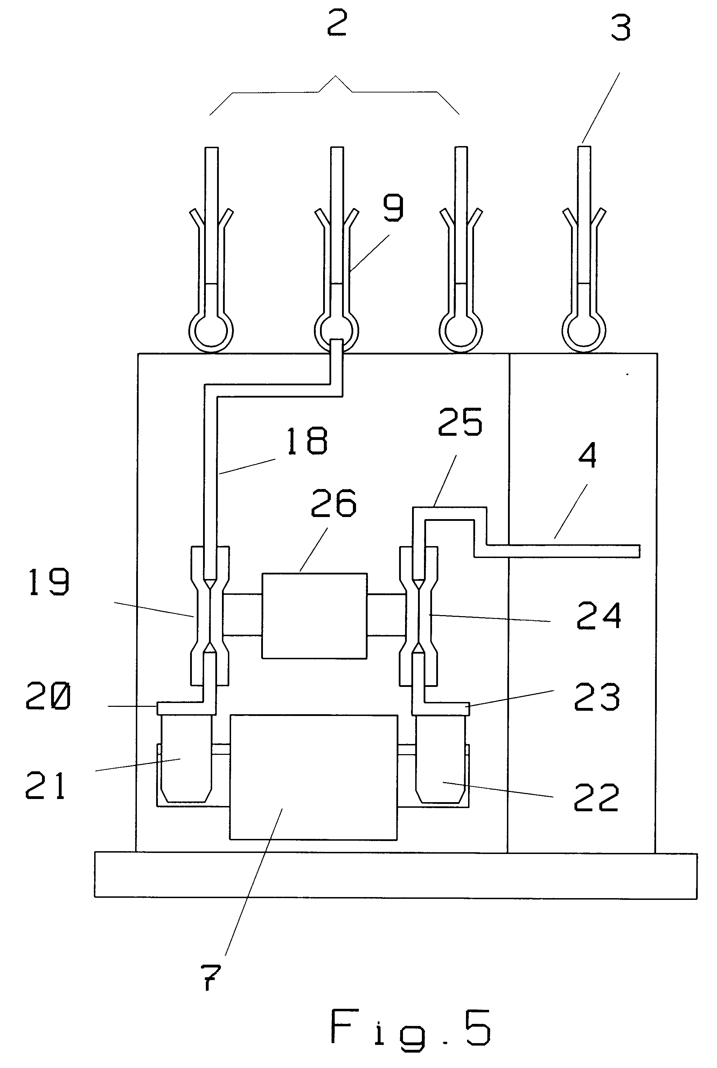

In Fig. 5 ist lediglich schematisch der interne Aufbau des Schubeinsatzes von Fig. 1 sowie des Sicherungs- und Schaltwerks 6 zu erkennen. Von der auf einer der Sammelschienen 2 steckenden Kontakttuple 9 führt eine erste Kontaktschiene 18 über eine erste Kontaktbrücke 19 und ein weiteres kurzes Kontaktscheinenstück 20 zu einer weiteren Kontakttuple 21 zur Aufnahme des linken Messerkontaktes der NH-Sicherung 7. Der rechte Messerkontakt dieser Sicherung steckt ebenfalls in einer Kontakttulpe 22, von der über ein Kontaktschienenstück 23, eine weitere Kontaktbrücke 24 sowie eine Kontaktschiene 25 schliesslich die Verbindung zur abgangsseitigen Klemme 4 hergestellt ist.

Die beiden Kontaktbrücken 19 und 24 sind auf einem senkrecht zur Zeichenebene linear verschiebbaren Block 26 aus einem Isolierstoffmaterial montiert und können gemeinsam mit diesem aus der Ebene der Kontaktschienen 18, 20 bzw. 23, 25 heraus verschoben werden, bis die Verbindung zwischen ihnen unterbrochen ist. Die Verschiebung erfolgt unter Betätigung des Schalthebels 8.

Die Verbindung zwischen den übrigen Sammelschienen 2 und den Kontaktklemmen 4 ist, senkrecht zur Zeichenebene versetzt, ganz entsprechend gelöst, wobei alle benötigten Kontaktbrücken auf dem Block 26 montiert sind. Ein Unterschied besteht lediglich hinsichtlich der Verbindung der Neutralleiterschiene zu ihrer entsprechenden Abgangsklemme. Diese Verbindung ist nicht über eine NH-Sicherung geführt. Hier besteht entweder die Möglichkeit, die Verbindung auf dem kürzesten Wege herzustellen, oder aber diese ebenfalls über das gemeinsame Schaltwerk zu führen.

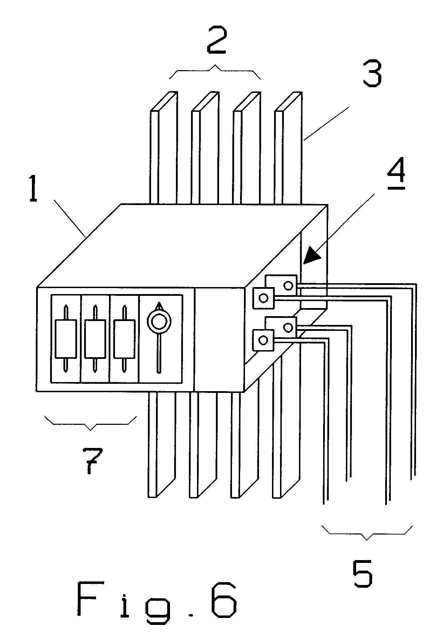

Fig. 6 zeigt schliesslich noch eine Ausführungsform für kleinere Ströme bis 160 A, während die Ausführungsform von Fig. 1 bzw. 2 für Ströme bis 1000 A geeignet ist. Hier sind die NH-Sicherungen 7, welche baulich kleiner als die bei der Ausführungsform von Fig. 1 benötigten sind, parallel nebeneinander in der gleichen Horizontalebene angeordnet. Auch dadurch ergibt sich wieder eine schmale Bauform für das Gehäuse 1, zusätzlich aber auch eine nur geringe Bauhöhe. Die abgangsseitigen Kontaktklemmen 4 sind hier wegen der geringeren Bauhöhe in zwei Ebenen versetzt gegeneinander angeordnet.

In Schaltschrank von Fig. 3 sind zwei Schubeinsätze der Art von Fig. 6 eingebaut dargestellt.

## Patentansprüche

1. Als Schubeinsatz für Einschubverteiler ausgebildeter Sicherungs-Lastschalter mit rückseitig angeordneten Steckverbindungen (9) zu mehreren, nebeneinander verlaufenden Sammelschienen (2,3), seitlich angeordneten Klemmen (4) für den Anschluss von Abgangsleitungen (5), NH-Sicherungen (7) sowie einem Schaltwerk (8,19,24,26) zur gemeinsamen Schaltung von sammelschienenseitig und abgangsseitig der NH-Sicherungen (7) angeordneten Schaltkontakten (19,24), dadurch gekennzeichnet, dass die NH-Sicherungen (7) bezüglich ihrer Längsrichtung parallel neben- bzw. übereinander angeordnet sind.

2. Sicherungs-Lastschalter nach Anspruch 1, dadurch gekennzeichnet, dass die NH-Sicherungen (7) übereinander und die Steckverbindungen (9) zu den Sammelschienen (2,3) sowie die abgangsseitigen Klemmen (4) entsprechend dem gegenseitigen Abstand der NH-Sicherungen (7) in senkrechter Richtung gegeneinander versetzt sind.

3. Sicherungs-Lastschalter nach Anspruch 1 oder 2, dadurch gekennzeichnet, dass die abgangsseitigen Klemmen (4) in einer Ebene angeordnet sind.

4. Sicherungs-Lastschalter nach Anspruch 1, dadurch gekennzeichnet, dass die NH-Sicherungen (7) sowie die Steckverbindungen (9) zu den Sammelschienen (2,3) auf gleicher Höhe nebeneinander und die abgangsseitigen Klemmen (4) in mindestens zwei Ebenen gegeneinander versetzt angeordnet sind.

5. Sicherungs-Lastschalter nach einem der Ansprüche 1 bis 4, dadurch gekennzeichnet, dass rückseitig auch eine Steckverbindung (9) zu einer Neutralleiterschiene (3) sowie eine entsprechende seitliche Klemme (4) vorgesehen sind und dass die Verbindung zwischen diesen Anschlusspunkten über das Schaltwerk zwecks gemeinsamer Schaltung mit den beidseitig der NH-Sicherungen (7) angeordneten Schaltkontakten (19,24) geführt ist.
